# EUROPEAN PATENT APPLICATION

(11) **EP 3 711 838 A1**
(43) Date of publication of application: **23.09.2020**
(21) Application number: 19892544.8
(22) Date of filing: 28.02.2019
(51) Int. Cl.: B01D 33/04, B01D 39/08

(54) **SOLID-LIQUID SEPARATION DEVICE AND FILTRATION DEVICE**

(30) Priority: 07.12.2018 JP 2018229943
(71) Applicant: Tsukishima Kikai Co., Ltd., Tokyo 104-0053 (JP)
(72) Inventor: SHIMADA Jun, Tokyo 104-0053 (JP); SUGA Toshihiro, Tokyo 104-0053 (JP); CHIN Takayoshi, Tokyo 104-0053 (JP); KURITA Shinpei, Tokyo 104-0053 (JP); FURUKAWA Tomohiro, Tokyo 104-0053 (JP)
(74) Representative: Müller-Boré & Partner Patentanwälte PartG mbB
(86) International application number: PCT/JP2019/007840
(87) International publication number: WO 2020/115921

(57) **Abstract**

A solid-liquid separation device of the present invention is a solid-liquid separation device, in which a filtration belt (1), a seal belt (8), and a squeezing belt (15) are wound around an outer circumference of a separation roll (7) rotated in a circumferential direction and are able to run along a rotational direction of the separation roll (7), an object (P) to be processed supplied between the filtration belt (1) and the seal belt (8) is sandwiched between the filtration belt (1) and the seal belt (8) on the outer circumference of the separation roll (7) and squeezed by the squeezing belt (15), and the object (P) to be processed is dehydrated by being ventilated by ejecting a ventilation gas toward a radially outer side of the separation roll (7) via a ventilation gas chamber (10) formed in an inner circumferential portion of the separation roll (7), in which the seal belt (8) is a woven fabric of multifilament or a woven fabric obtained by combination of multifilament and monofilament and is a thinner than the squeezing belt (15).

## Description

### [Technical Field]

The present invention relates to a solid-liquid separation device in which a filtration belt, a seal belt, and a squeezing belt are sequentially wound around an outer circumference of a separation roller, and an object to be processed to be supplied and sandwiched between the filtration belt and the seal belt is squeezed by the squeezing belt and is dehydrated by being ventilated by a ventilation gas ejected from the separation roller, and a filtration device equipped with such a solid-liquid separation device.

Priority is claimed on Japanese Patent Application No. 2018-229943, filed December 7, 2018, the content of which is incorporated herein by reference.

### [Background Art]

As such a solid-liquid separation device, for example, Patent Document 1 discloses a solid-liquid separation device in which a pair of endless separation filtration cloths (a filtration belt and a seal belt) are superimposed and wound around an outer circumference of a separation roller rotated in a circumferential direction, a squeezing belt is further wound around the outer circumference of the pair of separation filtration cloths, the pair of separation filtration cloths and the squeezing belt are able to run along the separation roller in a rotational direction thereof, an object to be processed supplied between the pair of separation filtration cloths is sandwiched between the separation filtration cloths on the outer circumference of the separation roll and squeezed by the squeezing belt, and the object to be processed is dehydrated by being ventilated by ejecting the ventilation gas to a radially outer circumferential side of the separation roll via a ventilation chamber formed on an inner circumferential portion of the separation roll.

Further, similarly, Patent Document 1 also discloses a filtration device in which an object to be processed is supplied from a supply unit onto a filtration cloth which is wound around a plurality of rolls and made to run, and the object to be processed is filtered by a filtration unit provided on a side of the filtration cloth with respect to the supply unit in a running direction of thereof, in which the aforementioned solid-liquid separation device is disposed on the side of the filtration unit in a running direction thereof, and a roller located on the side of the filtration unit among the plurality of rollers in a running direction thereof serves as the separation roll, and the filtration cloth is the filtration belt.

### [Citation List]

### [Patent Document]

[Patent Document 1]
Japanese Patent No. 4381462

### [Summary of Invention]

### [Technical Problem]

In this way, in the solid-liquid separation device described in Patent Document 1, in the separation roll, the object to be processed is sandwiched between the filtration belt and the seal belt wound around the outer circumference thereof, the squeezing belt is further wound around the outer circumference of the seal belt, and ventilation and dehydration are performed by the ventilation gas ejected from the inner circumferential portion of the separation roll, provided that three belts are stacked in a state of sandwiching the object to be processed.

For this reason, in particular, in the filtration belt located at an innermost circumference and an intermediate seal belt in which the object to be processed is sandwiched between the filtration belt and the intermediate seal belt, a circumferential speed difference occurs due to the thickness of the object to be processed, and a step is formed at both end portions of the belt in a width direction. Thus, wrinkles are likely to occur in the seal belt. Further, when wrinkles occur in the seal belt in this way, the seal belt is bent from a wrinkled portion by pressurization due to the squeezing belt, and the seal belt may break when solid-liquid separation is performed over a long time.

The present invention has been made under such a background, and an object thereof is to provide a solid-liquid separation device and a filtration device in which it is possible to prevent breakage of the seal belt, by curbing occurrence of wrinkles in the seal belt, even if a long time solid-liquid separation is performed.

### [Solution to Problem]

According to an aspect of the present invention, there is provided a solid-liquid separation device in which an endless filtration belt is wound around an outer circumference of a separation roll rotated in a circumferential direction, a seal belt is wound around an outer circumference of the filtration belt, a squeezing belt is further wound around an outer circumference of the seal belt, and the filtration belt, the seal belt, and the squeezing belt are able to run along a rotational direction of the separation roll, an object to be processed supplied between the filtration belt and the seal belt is sandwiched between the filtration belt and the seal belt on the outer circumference of the separation roll and squeezed by the squeezing belt, and the object to be processed is dehydrated by being ventilated by ejecting a ventilation gas toward a radially outer side of the separation roll via a ventilation gas chamber formed in an inner circumferential portion of the separation roll, in which the seal belt is a multifilament woven fabric or a woven fabric obtained by combination of multifilaments and monofilaments, and is a thinner than the squeezing belt.

Further, according to another aspect of the present invention, there is provided a filtration device in which an object to be processed is supplied from a supply unit onto a filtration cloth wound around a plurality of rolls and made to run, and the object to be processed is filtered by a filtration unit provided on a side closer to a running direction of the filtration cloth than the supply unit, in which the solid-liquid separation device is provided on the side closer to the running direction than the filtration unit, and a roll located on the side closer to the running direction than the filtration unit among the plurality of rolls serves as the separation roll, and the filtration cloth is the filtration belt.

In the solid-liquid separation device and the filtration device having the aforementioned configuration, the seal belt of the solid-liquid separation device is thinner than the squeezing belt and is a fabric of woven multifilament or a woven fabric obtained by combination of multifilaments and monofilaments. Accordingly, when the object to be processed is squeezed by the squeezing belt, the object to be processed has excellent compatibility with the squeezing belt and has good conformability characteristics. For this reason, it is possible to suppress an occurrence of wrinkles in the seal belt, and to prevent breakage of the seal belt due to the wrinkles for a long time. In order to surely prevent the occurrence of wrinkles of the seal belt, it is desirable that the thickness of the seal belt be 3 mm or less.

Further, by setting an air permeability of the seal belt to be higher than an air permeability of the filtration belt and to be within a range of 5 cc/cm²/min to 1000 cc/cm²/min, clogging of the seal belt is prevented and efficient solid-liquid separation can be performed. If the air permeability of the seal belt is equal to or less than the air permeability of the filtration belt or set to be less than 5 cc/cm²/min, the seal belt is likely to become clogged, and it is difficult to separate the liquid content from the object to be processed. However, if the air permeability of the seal belt exceeds 1000 cc/cm²/min, the strength of the seal belt is impaired, breakage is likely to occur, and the object P to be processed passes through the seal belt and leaks together with the liquid content due to ventilation. Thus, the recovery rate of the object to be processed decreases.

On the other hand, it is desirable that the air permeability of the squeezing belt be equal to or greater than 3000 cc/cm²/min. If the air permeability of the squeezing belt is less than 3000 cc/cm²/min, it is difficult for the ventilation gas to pass through the squeezing belt, clogging is likely to occur in the squeezing belt, and there is a likelihood that it will not be possible to efficiently dehydrate the liquid content separated from the object to be processed by the seal belt.

Further, it is desirable for the squeezing belt to break only with a tensile stress of 20 N/mm or more when a tensile stress is applied. By preventing occurrence of breakage in the squeezing belt up to such a high tensile stress, it is possible to increase the ejection pressure of the ventilation gas, and to promote more efficient solid-liquid separation. In addition, in order to ensure such a high tensile stress, it is desirable that a warp of the squeezing belt be polyarylate fibers or a polyparaphenylene benzobisoxazole fiber.

Furthermore, it is desirable that the filtration belt be one kind of a woven multifilament fabric, a woven monofilament fabric, and a span table woven fabric, or a woven fabric obtained by combination of at least two kinds of multifilament, monofilament, and spun table. As a result, even if the ejection pressure of the ventilation gas is increased as described above, it is possible to prevent damage to the filtration belt due to ejection of the ventilation gas, reduce the frequency of replacement of the filtration belt, and further reliably improve efficient solid-liquid separation, and operation thereof is also economical.

### [Effects of Invention]

As described above, according to the present invention, by suppressing an occurrence of wrinkles in the seal belt, it is possible to prevent breakage of the seal belt due to such wrinkles for a long time, prevent damage to the filtration belt and the squeezing belt, and achieve an efficient solid-liquid separation.

### [Brief Description of Drawings]

Fig. 1 is a side view schematically showing an embodiment of a filtration device of the present invention.
Fig. 2 is a side view showing an embodiment of a solid-liquid separation device of the present invention used in the filtration device shown in Fig. 1.
Fig. 3 is a partially cutaway rear view of the solid-liquid separation device shown in Fig. 2, as viewed from a right side of Fig. 2.

### [Description of Embodiments]

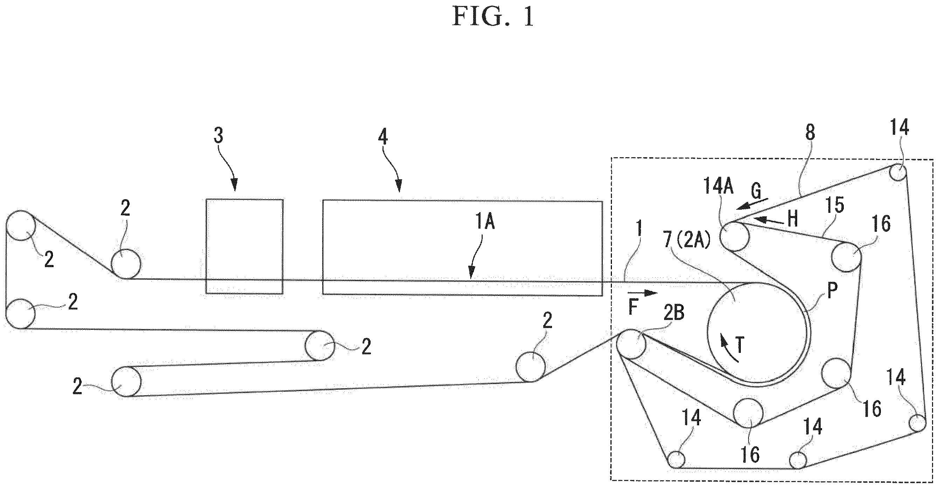

Figs. 1 to 3 show an embodiment of a solid-liquid separation device of the present invention and a filtration device equipped with the solid-liquid separation device. As shown in Fig. 1, the solid-liquid separation device in the present embodiment is equipped with a filtration belt 1, a roll 2, a separation roll 7, a seal belt 8, a ventilation gas chamber 10 and a squeezing belt 15.

The filtration device according to the present embodiment has a configuration of a horizontal vacuum filtration device. As shown in Fig. 1, an endless filtration belt 1 is wound around a plurality of rolls 2 disposed parallel to each other with a central axis horizontal and is stretched therearound. One of the plurality of rolls 2 serves as a driving roll 2A and is rotationally driven around the central axis. Therefore, a horizontal portion 1A of the filtration belt 1 that is horizontally laid in an upper part of the device can run to move in a running direction indicated by an arrow F. Further, an object P to be processed supplied from the supply unit 3 disposed on a side behind the horizontal portion 1A in the running direction F is filtered by a filtration unit 4 disposed between the object P to be processed and the driving roll 2A immediately on the running direction F side via the filtration belt 1.

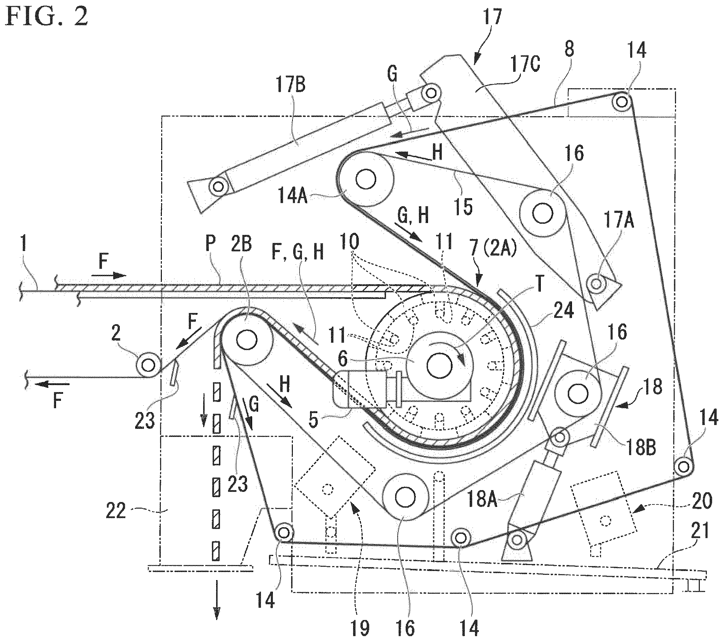

Here, the driving roll 2A is located at an end portion of the horizontal portion 1A on the running direction F side, and is rotated by a driving unit 5 such as a motor via a variable speed reducer 6 as shown in Fig. 2, thereby causing the filtration belt 1 to run continuously or intermittently at a predetermined pitch. Further, in the filtration unit 4, liquid content of the object P to be processed is suctioned and filtered via the filtration belt 1 by a vacuum tray (not shown) which supports the filtration belt 1 in the horizontal portion 1A. Further, a solid-liquid separation device according to an embodiment of the present invention is disposed on the side closer to the running direction F than the filtration unit 4 as shown by a broken line in Fig. 1.

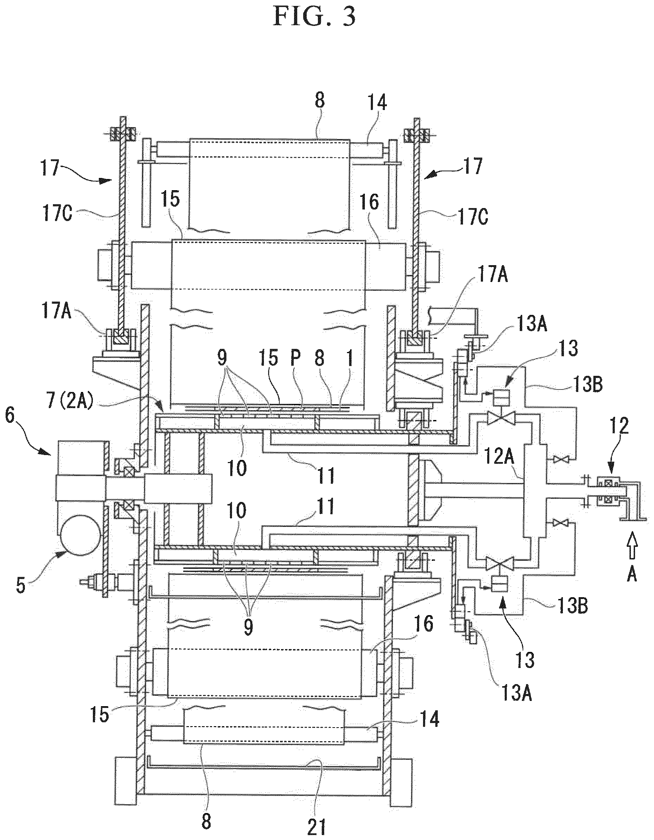

In the solid-liquid separation device of this embodiment, as shown in Figs. 2 and 3, the endless filtration belt 1 and the seal belt 8 are able to run along a rotational direction T around an outer circumference of the separation roll 7 that is rotated in a circumferential direction in the rotational direction T, while being superimposed and wound to sandwich the object P to be processed filtered by the filtration unit 4 therebetween. Here, in the present embodiment, the driving roll 2A of the rolls 2 in the filtration device serves as the separation roll 7, and as for the filtration belt 1, the filtration belt 1 of the filtration device is wound around the separation roll 7 as it is.

The separation roll 7 (the driving roll 2A) has a substantially hollow cylindrical shape, and a plurality of penetration holes 9 open on its cylindrical surface portion and on a side inward from a range of a width of the filtration belt 1 in a central axis direction of the separation roll 7 as shown in Fig. 3 and along the entire circumference of the separation roll 7 in the circumferential direction. On the other hand, a plurality of ventilation gas chambers 10 communicating with each of the penetration holes 9 are provided on an inner circumferential portion of the separation roll 7 to be isolated from each other, within a range substantially the same as a range in which the penetration holes 9 are formed in the central axis direction, and to divide the inner circumferential portion of the separation roll 7 into arc shapes at substantially equal intervals over the entire circumference of the separation roll 7 in the circumferential direction.

Further, the same number of ventilation pipes 11 as the ventilation gas chambers 10 is inserted through the further inner circumferential portion of the separation roll 7 from one end side (a right side in Fig. 3) in the central axis direction, and are connected to the respective ventilation gas chambers 10. The ventilation gas A such as air (compressed air) or steam supplied to the ventilation pipe 11 is ejected and ventilated from the penetration hole 9 to the outer circumference of the separation roll 7 via the ventilation gas chamber 10. Further, the ventilation gas A is supplied from a supply source (not shown) to a ventilation pipe 11 fixed to the rotating separation roll 7 via a rotary joint (or a multi-stage rotary joint) 12.

Further, an automatic valve 13 is provided for each ventilation pipe 11 between a ventilation gas branch chamber 12A on the separation roll 7 side connected to the rotary joint 12 and each ventilation pipe 11. Here, an opening and closing operation of the automatic valve 13 is controlled, when the ventilation gas A from the ventilation gas branch chamber 12A is in the state of being supplied or not supplied to the automatic valve 13 as a signal gas via a supply pipe 13B, by a limit switch 13A which is attached to the separation roll 7 and operates in accordance with the rotational positions of each ventilation gas chamber 10.

Further, the present embodiment is configured so that the ventilation gas A is continuously supplied only to the ventilation gas chamber 10 located at a predetermined rotational position, among the ventilation gas chambers 10 within a range in which the filtration belt 1 and the seal belt 8 are wound in the circumferential direction around the separation roll 7 by the automatic valve 13 controlled in this way, while being sequentially switched with the rotation of the separation roll 7. That is, when the ventilation gas chamber 10 is at the predetermined rotational position, the automatic valve 13 is opened and the ventilation gas is always supplied to the ventilation gas chamber 10 and is ejected from the penetration hole 9. On the other hand, at positions other than the predetermined rotational position, the control is performed so that the automatic valve 13 is closed and ventilation is not performed.

On the other hand, the seal belt 8 has substantially the same width as that of the filtration belt 1, is wound around the outside of the filtration belt 1 on the outer circumference of the separation roll 7, and is able to run in the same running direction G as the running direction F integrally with the filtration belt 1 in the rotational direction T of the separation roll 7 (the driving roll 2A). Further, the roll 2B around which the seal belt 8 is wound next to the separation roll 7 in the running direction G is the same as the roll 2 around which the filtration belt 1 is wound as shown in Fig. 2, the seal belt 8 being pulled downward to the side opposite to the filtration belt 1 and separated from the roll 2B, wound around a plurality of rolls 14 and wound in an endless shape to reach the outer circumference of the separation roll 7 again.

Further, the squeezing belt 15 is further wound around the outer circumference of the seal belt 8 on the outer circumference of the separation roll 7 around which the filtration belt 1 and the seal belt 8 are superimposed and wound in this way. The squeezing belt 15 is also able to run in the same running direction H as the running directions F and G along the rotational direction T on the outer circumference of the separation roll 7 together with the filtration belt 1 and the seal belt 8.

Further, in this embodiment, the squeezing belt 15 has a width wider than those of the filtration belt 1 and the seal belt 8, and both ends in the width direction are wound around the separation roll 7 to cover the filtration belt 1 and the seal belt 8 beyond each of both ends in the width direction of the filtration belt 1 and the seal belt 8 as shown in Fig. 3. However, if a horizontal width of the squeezing belt 15 is wider than a cake width of the object P to be processed that is sandwiched and squeezed between the filtration belt 1 and the seal belt 8, the horizontal width of the squeezing belt 15 is not necessarily wider than the filtration belt 1 and the seal belt 8, and may be substantially equal to or may be narrower than the widths of the filtration belt 1 and the seal belt 8.

Furthermore, in the running direction H, the squeezing belt 15 is wound around the common roll 2B around which the filtration belt 1 and the seal belt 8 are wound next to the separation roll 7, and then is sequentially wound around a plurality of rolls 16 disposed between the separation roll 7 and the seal belt 8 wound around the rolls 14, as shown in Fig. 2. Thereafter, the squeezing belt 15 and the seal belt 8 are wound around the roll 14A around which the seal belt 8 is wound just before reaching the separation roll 7 and are wound in an endless shape to reach the outer circumference of the separation roll 7 again.

The rolls 2B, 14A and 16 around which the squeezing belt 15 is wound have a diameter larger than that of the roll 2 around which only the filtration belt 1 is wound and the roll 14 around which only the seal belt 8 is wound and have a diameter smaller than that of the separation roll 7. Furthermore, one of the plurality of rolls 16 is attached to an arm 17C of a squeezing belt tensioning device 17 that is able to be rotated about a support shaft 17A by a cylinder device 17B and rotates the arm 17C and positions it at a predetermined position, thereby imparting a predetermined tension to the squeezing belt 15.

Furthermore, the other one of the plurality of rolls 16 has at least one end attached to a bracket 18B of a squeezing belt meandering correcting device 18 which also is made to advance and retract in the running direction H of the squeezing belt 15 by the cylinder device 18A. In this way, by moving the bracket 18B back and forth in the running direction H to finely adjust an inclination of the roll 16 with respect to the running direction H, when meandering occurs in the running of the squeezing belt 15, the meandering is corrected. However, in the filtration device and the solid-liquid separation device of the present embodiment, including these rolls 16, all of the rolls 2, 14, and 16 other than the driving roll 2A (the separation roll 7) is a driven roll that is not connected to the driving unit.

Furthermore, a squeezing belt cleaning device 19 is provided on a running path of the squeezing belt 15, a separation filtration cloth cleaning device 20 is provided on a running path of the seal belt 8, and a cleaning device (not shown) is also provided on a running path of the filtration belt 1. Further, a receiving tray 21 is provided at a bottom of the solid-liquid separation device. Further, a discharge port 22 which discharges a cake of the object P to be processed subjected to the solid-liquid separation by the solid-liquid separation device is provided below the roll 2B.

Furthermore, a scraper 23, a wire and the like are provided on the filtration belt 1 and the seal belt 8 which are separated from the roll 2B toward each of the running directions F and G in opposite directions from each other so as to be in contact with the surface being in contact with the object P to be processed. Further, a recovery plate 24 having an arc-shaped cross section is disposed at an interval from the squeezing belt 15 on the outer circumference of a portion on which the filtration belt 1, the seal belt 8, and the squeezing belt 15 are wound around the separation roll 7, recovers the liquid content separated by the ventilation and guides it to the receiving tray 21.

Further, in the solid-liquid separation device and the filtration device having such a configuration, the seal belt 8 is a woven fabric of multifilament or a woven fabric obtained by combination of multifilament and monofilament and is thinner than the squeezing belt 15. It is desirable that the thickness of this seal belt be 3 mm or less. Further, it is desirable that air permeability of the seal belt 8 be higher than air permeability of the filtration belt 1 and be in the range of 5 cc/cm²/min to 1000 cc/cm²/min.

On the other hand, it is desirable that the air permeability of the squeezing belt 15 be 3000 cc/cm²/min or more. In addition, it is desirable that the squeezing belt 15 have a strength such that is broken by a tensile stress of 20 N/mm or more when the tensile stress is applied. Further, it is desirable that a warp of the squeezing belt 15 be a polyarylate fiber or a polyparaphenylene benzobisoxazole fiber. It is desirable that filtration belt 1 be at least one kind of a woven fabric of multifilament, a woven fabric of monofilament or a woven fabric of spun table, or a woven fabric obtained by a combination of at least two kind of the multifilament, the monofilament, and the spun table.

In an embodiment of such a solid-liquid separation device and a filtration device, the object P to be processed filtered by the filtration unit 4 of the filtration device is sandwiched between the filtration belt 1 and the seal belt 8 on the outer circumference of the separation roll 7 of the solid-liquid separation device, and the squeezing belt 15 is further wound around the outer circumference of the separation roll 7 with a high tension. Thus, the object P to be processed is squeezed under a pressing force on the radially inner circumferential side of the separation roll 7 and is dehydrated. Therefore, it is possible to more efficiently reduce the liquid content of the object P to be processed by the dehydration action of the ventilation gas A ejected from the penetration hole 9 formed in the separation roll 7 and the dehydration action of the squeezing provided by the squeezing belt 15. Thus, even if there is a drying process after the solid-liquid separation process of the object P by the solid-liquid separation device, the load in the drying process can be reduced.

In addition, in the filtration belt 1, the seal belt 8, and the squeezing belt 15 wound around the separation roll 7 with the object P to be processed interposed between them, distances from the central axis of the separation roll 7 are different according to the thickness of the object P to be processed, and the filtration belt 1 is caused to run by being directly wound around the separation roll 7 (the driving roll 2A). The seal belt 8 and the squeezing belt 15 are caused to run via the filtration belt 1 and the object P to be processed. For this reason, a circumferential speed difference occurs between the filtration belt 1 and the seal belt 8 on the outer circumference of the separation roll 7, and a shearing force trying to shear in the circumferential direction acts on the object P to be processed due to the circumferential speed difference. The object P to be processed is efficiently squeezed and dehydrated by the shearing force and the pressing force.

Further, in the solid-liquid separation device and the filtration device having the aforementioned configuration, the seal belt 8 of the solid-liquid separation device is thinner than the squeezing belt 15 and is a woven fabric of multifilament or a woven fabric obtained by combination of the multifilament and monofilament. Accordingly, when the object P to be processed is squeezed by the squeezing belt 15 via the seal belt 8, the object P to be processed has excellent compatibility with the squeezing belt 15 and has a high follow-up property. For this reason, even if a circumferential speed difference occurs between the filtration belt 1 and the seal belt 8 as described above, or a step is formed at both end portions of the filtration belt 1 and the seal belt 8 in the width direction (the central axis direction of the separation roll 7) due to the thickness of the object P to be processed, it is possible to suppress an occurrence of wrinkles in the seal belt 8.

For this reason, according to such a solid-liquid separation device and a filtration device, it is possible to prevent an occurrence of a situation in which such a wrinkled portion is bent by being pressed by the squeezing belt 15, and is broken early when performing a long-time solid-liquid separation. Therefore, according to the solid-liquid separation device and the filtration device having the aforementioned configuration, a stable solid-liquid separation can be performed over a long period of time, which is efficient and economical.

Further, in order to reliably prevent the seal belt 8 from being wrinkled and broken early, the thickness of the seal belt 8 is desirably 3 mm or less as described above. If the thickness of the seal belt 8 is thicker than 3 mm, wrinkles occur and it is difficult to return to the original state when a fold is formed, and breakage is likely to occur from the folded portion.

Furthermore, in order to achieve more efficient solid-liquid separation, while preventing breakage of the seal belt 8 as described above, it is desirable that the air permeability of the seal belt 8 be higher than the air permeability of the filtration belt 1 and be within the range of 5 cc/cm²/min to 1000 cc/cm²/min. When the air permeability of the seal belt 8 is equal to or less than the air permeability of the filtration belt 1 or less than 5 cc/cm²/min, there is a likelihood that the seal belt 8 is likely to be clogged, and it is difficult to efficiently separate the liquid content from the object P to be processed. On the other hand, if the air permeability of the seal belt 8 exceeds 1000 cc/cm²/min, since the strength of the seal belt 8 is impaired and breakage is likely to occur, and the object P to be processed leaks through the seal belt 8 together with the liquid content due to the ventilation, the recovery rate of the object P to be processed decreases.

Moreover, it is desirable that the air permeability of the squeezing belt 15 be equal to or greater than 3000 cc/cm²/min. If the air permeability of the squeezing belt 15 is less than 3000 cc/cm²/min, it is difficult for the ventilation gas A to pass through the squeezing belt 15, clogging is likely to occur in the squeezing belt 15, and there is a likelihood that it is not possible to efficiently dehydrate the liquid content, which is separated from the object P to be processed, from the seal belt 8 via the squeezing belt 15.

Furthermore, it is desirable that the squeezing belt 15 has strength to be broken by a tensile stress (tension) of 20 N/mm or more when the tensile stress is applied. By preventing an occurrence of breakage in the squeezing belt 15 up to such a high tensile stress, since the ejection pressure of the ventilation gas A can be increased, more efficient solid-liquid separation can be promoted.

Here, in order to ensure strength in the squeezing belt 15 such that breakage does not occur even under such a high tensile stress, it is desirable that a warp of the squeezing belt 15 be a polyarylate fiber or a polyparaphenylene benzobisoxazole fiber. Since a high tensile stress does not act on the weft, there is no particular limitation as long as it has a normal strength.

Furthermore, it is desirable that the filtration belt 1 be at least one kind of a woven fabric of multifilament, a woven fabric of monofilament, a woven fabric of a spun table, or a woven fabric obtained by combining at least two kinds of the multifilament, the monofilament, and the spun table. Therefore, even if the ejection pressure of the ventilation gas A is increased as described above, it is possible to prevent damage to the filtration belt 1 due to the ejection of the ventilation gas A. Accordingly, the frequency of replacement of the filtration belt 1 can be reduced, and it is possible to more reliably perform efficient solid-liquid separation. Further, since the frequency of replacement of the filtration belt 1 is reduced, it is also economical.

### [Industrial Applicability]

By applying the solid-liquid separation device of the present invention to this field, it is possible to prevent breakage of the seal belt even when performing the solid-liquid separation for a long time, while suppressing the occurrence of wrinkles in the seal belt.

### [Reference Signs List]

1 Filtration belt
2, 14, 16 Roll
2A Driving roll
3 Supply unit
4 Filtration unit
7 Separation roll
8 Seal belt
9 Penetration hole
10 Ventilation gas chamber
11 Ventilation Pipe
13 Automatic valve
15 Squeezing belt
17 Squeezing belt tensioning device
A Ventilation gas
P Object to be processed
F Running direction of filtration belt 1
G Running direction of seal belt 8
H Running direction of squeezing belt 15
T Rotational direction of separation roll 7

## Claims

1. A solid-liquid separation device,
in which an endless filtration belt is wound around an outer circumference of a separation roll rotated in a circumferential direction, a seal belt is wound around an outer circumference of the filtration belt, and a squeezing belt is further wound around an outer circumference of the seal belt, and the filtration belt, the seal belt, and the squeezing belt are able to run along a rotational direction of the separation roll, and
an object to be processed supplied between the filtration belt and the seal belt is sandwiched between the filtration belt and the seal belt on the outer circumference of the separation roll and squeezed by the squeezing belt, and the object to be processed is dehydrated by being ventilated by ejecting a ventilation gas toward a radially outer side of the separation roll via a ventilation gas chamber formed in an inner circumferential portion of the separation roll,
wherein the seal belt is a woven fabric of multifilament or a woven fabric obtained by combination of multifilament and monofilament and is a thinner than the squeezing belt.

2. The solid-liquid separation device according to claim 1, wherein a thickness of the seal belt is 3 mm or less.

3. The solid-liquid separation device according to claim 1 or 2, wherein an air permeability of the seal belt is higher than an air permeability of the filtration belt and is within a range of 5 cc/cm²/min to 1000 cc/cm²/min.

4. The solid-liquid separation device according to any one of claims 1 to 3, wherein an air permeability of the squeezing belt is 3000 cc/cm²/min or more.

5. The solid-liquid separation device according to any one of claims 1 to 4, wherein, when a tensile stress is applied, the squeezing belt breaks with the tensile stress of 20 N/mm or more.

6. The solid-liquid separation device according to any one of claims 1 to 5, wherein a warp of the squeezing belt is a polyarylate fiber or a polyparaphenylene benzobisoxazole fiber.

7. The solid-liquid separation device according to any one of claims 1 to 6, wherein the filtration belt is at least one kind of a woven fabric of multifilament, a woven fabric of monofilament, and a woven fabric of spun table, or a woven fabric obtained by a combination of at least two kinds of the multifilament, the monofilament, and the spun table.

8. A filtration device in which an object to be processed is supplied from a supply unit onto a filtration cloth wound around a plurality of rolls and made to run, and the object to be processed is filtered by a filtration unit provided on a side closer to a running direction of the filtration cloth than the supply unit,
wherein the solid-liquid separation device according to any one of claims 1 to 7 is provided on the side closer to the running direction than the filtration unit, and a roll located on the side closer to the running direction than the filtration unit among the plurality of rolls serves as the separation roll, and the filtration cloth is the filtration belt.
